Europäisches Patentamt

**European Patent Office**

**Office européen des brevets**

(11) Veröffentlichungsnummer: **0 013 437**

**A1**

(12) # EUROPÄISCHE PATENTANMELDUNG

(21) Anmeldenummer: 79105409.1

(22) Anmeldetag: 31.12.79

(51) Int. Cl.³: **B 29 H 17/00**
**B 29 H 17/06, B 29 H 5/08**

(30) Priorität: 09.01.79 DE 2900565

(43) Veröffentlichungstag der Anmeldung:
23.07.80 Patentblatt 80/15

(44) Benannte Vertragsstaaten:
AT BE FR GB IT

(71) Anmelder: BAYER AG
Zentralbereich Patente, Marken und Lizenzen
D-5090 Leverkusen 1, Bayerwerk(DE)

(72) Erfinder: Vente, Paul
Pregelstrasse 26
D-5090 Leverkusen 1(DE)

(72) Erfinder: Seidenschnur, Dieter, Dipl.-Ing.
Heinestrasse 12
D-5206 Neunkirchen-Seelscheid 2(DE)

(72) Erfinder: Knipp, Ulrich, Dr.
Haberlandstrasse 3
D-5060 Bergisch-Gladbach 2(DE)

(72) Erfinder: Spenner, Anton
Bearenstrasse 2
D-5090 Leverkusen 3(DE)

(54) Verfahren und Vorrichtung zur Reifenentformung bei segmentierten Kernen.

(57) Bei der Kernentformung von Luftreifen (33) werden jeweils Gruppen des segmentierten Kerns (1a, 1b, 1c, 1d) zur Reifenmitte verfahren und von dort außerhalb der Reifenebene gebracht. Der Kernaufbau im Reifenwerkzeug (30, 32) erfolgt in umgekehrter Richtung. Die einzelnen Kernsegmente (1) sind zur Reifenmitte hin mit einem Führungs- und Adapterteil (21) verbunden, wodurch ein automatischer, störungsfreier Kernauf- und -abbau möglich ist. In einer Reifenform mit einem solchen segmentierten Kern ist das Konfektionieren und Verpressen von Reifen ebenso möglich wie die Herstellung von Integralreifen aus gießfähigen Elastomeren.

FIG 4

EP 0 013 437 A1

0013437

BAYER AKTIENGESELLSCHAFT          5090 Leverkusen,Bayerwerk

Zentralbereich                    Hö/bc
Patente, Marken und Lizenzen

Verfahren und Vorrichtung zur Reifenentformung bei segmentierten Kernen

Die Erfindung betrifft ein Verfahren zum Zerlegen eines segmentierten Reifenkerns innerhalb einer Form, ein Verfahren zum Zusammenbau eines Reifenkerns aus Kernsegmenten innerhalb einer Reifenform und eine Vorrichtung bestehend aus einem Werkzeug, durch das die Außenkontur des Reifens festgelegt wird und einem Reifenkern, durch den die Innenkontur des Reifens festgelegt wird, sowie den dazugehörigen Beschickungs-, Transport- und Steuereinrichtungen.

Es ist bekannt, einen mehrteiligen, expandierbaren Kern für die Herstellung von Reifen zu verwenden. Der Unterschied zwischen expandierter und zurückgezogener Lage ist nicht sehr groß. Mit dieser Vorrichtung können nur Niederquerschnittsreifen mit geringer Bombierungshöhe erzeugt werden. Die meisten handelsüblichen Reifen mit

Le A 19 323

einer größeren Ballonhöhe lassen sich mit diesem Werkzeug nicht herstellen. Kritisch zu beurteilen ist auch bei dieser Vorrichtung das Auftreten von Materialfahnen, die das Entkernen erschweren und das häufige Reinigen des Werkzeugs erforderlich machen. Bei dem bekannten Kernaufbau ist es kaum zu vermeiden, daß Material in die Öffnungen für die Kupplungsstifte und Bewegungsdorne oder zwischen die Keilflächen gelangt und die Beweglichkeit des Kerns beeinträchtigt.

Der Erfindung liegt allgemein die Aufgabe zugrunde, die Herstellung hochwertiger Reifen wirtschaftlicher zu gestalten, insbesondere soll durch die Automatisierung des Einbringens eines Kerns in das Reifenwerkzeug und des praktikablen Kernentfernens im Reifenwerkzeug eine Verkürzung der Zykluszeiten erreicht werden. Es sind an die Störunanfälligkeit der Vorrichtung hohe Anforderungen zu stellen. Die Aufgabe wird dadurch gelöst, daß beim Zerlegen des Kernes die Kernsegmente gruppenweise zur Reifenmitte hin bewegt und von dort aus diese Kernsegmentgruppen in eine Ebene außerhalb der Reifenebene gebracht werden. Das Verfahren zum Zusammenbau des Reifenkerns wird dadurch gelöst, daß Kernsegmente gruppenweise in die Reifenmitte, näherungsweise in der Reifenebene, gebracht werden, durch eine radiale Bewegung gruppenweise in ihre Position als Formkern gefahren und in ihre Endposition arretiert werden. Vorrichtungsmäßig wird die Aufgabe dadurch gelöst, daß der Kern aus Segmenten besteht, die Segmente zur Reifenmitte hin mit einem Führungs- und Adapterteil verbunden sind, die Segmente gruppenweise näherungsweise in der Reifenebene radial bewegbar und bei einer Lage in Reifenmitte auch

Le A 19 323

näherungsweise senkrecht zur Reifenebene bewegbar sind.

Nach dem erfindungsgemäßen Verfahren lassen sich insbesondere aus gießfähigen Elastomeren hochwertige Reifen erzeugen. Das Verfahren ist so flexibel, das hinsichtlich Reifenbreite, Reifendurchmesser, Ballonhöhe die allermeisten der handelsüblichen Reifen hergestellt werden können.

Besonders günstig ist auch, daß das Befüllen vom Zentrum her erfolgen kann. Im montierten Zustand hat der Kern zur Reifenmitte hin keine störenden Aufbauteile. Ob der Reifen durch Spritzguß oder durch Schleudern gebildet wird, ist bei dem erfindungsgemäßen Verfahren nebensächlich. Das Verfahren ist nicht nur geeignet zur Herstellung eines Integralreifens, auch eine Konfektionierung oder Teilkonfektionierung eines Reifens auf dem lagestabilen Kern ist möglich, ebenso wie das Verpressen von vorkonfektionierten Reifen (Vulkanisieren). Es können auf der erfindungsgemäßen Vorrichtung sowohl gießfähige wie auch spritzfähige oder vulkanisierfähige Elastomere verarbeitet werden.

Der Reifenkern ist sehr form- und lagestabil. Er kann in kurzer Zeit maschinell in der Form demontiert und aufgebaut werden. Wegen der einfachen radialen Bewegung näherungsweise in der Reifenebene ist ein ungestörter Langzeitbetrieb gewährleistet.

Der vorzugsweise metallische Kern ergibt eine glatte innere Oberfläche. Die Kernsegmente lassen sich so genau führen und arretieren, daß Reifen hoher Rundlauf-

Le A 19 323

genauigkeit erhalten werden. Durch die hohe mögliche Präzision bei der Herstellung kann auf eine Überdimensionierung der Wanddicke aus Sicherheitsgründen verzichtet werden.

Am Kern sind (unvermeidliche bzw. gewollte) Entlüftungsschlitze vorhanden. Falls in diese Schlitze Material eindringen sollte, ist die Zerlegbarkeit des Kerns nicht in Frage gestellt. Eine Fertigung ohne Bladder ist möglich.

Die Kernsegmente haben zur Reifenmitte hin einen Führungs- und Adapterteil. Sie werden bei der Kernentformung zuerst radial zur Mitte hin bewegt und dann durch den Reifen- und Forminnendurchmesser axial aus der Formtrennebene verfahren. Das Verschieben der Kernsegmente zum Mittelpunkt erfolgt üblicherweise mit Hilfe einer Hubelementgruppe. Wenn sie verschwenkbar angeordnet ist, können mit einer Hubelementgruppe alle Segmentgruppen bewegt werden. Bei dem Hub gleiten die Führungsteile der Kernsegmente aus der Führung der Außenform in die Führung eines Aufnahmetisches, der im Zentrum positioniert ist. Der Aufnahmetisch mit dazugehöriger Kernsegmentgruppe wird axial abgesenkt und dann beispielsweise linear verfahren. Der nächste freie Aufnahmetisch wird in Aufnahmestellung positioniert, so daß die nächste Kernsegmentgruppe entformt werden kann. Ein solcher Bewegungsablauf, der sich auf linearen oder einfachen geometrischen (z.B. kreisförmigen) Bahnen abspielt, ist wenig störanfällig. Bei bekannten Vorrichtungen ist der

Le A 19 323

0013437

dreidimensionale Bewegungsablauf recht aufwendig. Durch die einfachen und kostengünstigen Führungen im Zusammenhang mit Anschlägen und gesteuerten Hubelementen ist eine exakte Positionierung der Kernsegmente auch über lange Betriebszeiten möglich.

Eine weitere Stabilisierung und Verspannung der Kernsegmente ist durch die Schnittführung zwischen den Kerntrennebenen gegeben. Die einfache geometrische Form der Kernsegmente ist aus Fertigungsgründen erwünscht.

Der Kern kann ebenso wie die Form beheizt werden, so daß auch vulkanisierfähige Massen auf den Kern in engen Wandstärketoleranzen gepreßt und verarbeitet werden können.

Es kann erforderlich sein, vor dem Gießen die Form zu evakuieren. Durch das erfindungsgemäße Verfahren treten bei diesem Schritt keine besonderen Schwierigkeiten auf. Die Kanäle können zwischen oder in den Segmenten verlaufen.

Die Kerntrennebene verlaufen vorzugsweise radial bzw. nahezu radial. Es ist beispielsweise vorteilhaft, wenn die Segmente, die als erste aus dem Kern entfernt werden (und damit auch als letzte wieder eingebaut werden) geringfügig keilförmig zum Außendurchmesser hin ausgebildet sind. Es wird dadurch die Leichtgängigkeit beim Zerlegen des Kerns verbessert und ein Verspannen der Kernsegmente im expandierten Zustand erreicht.

Le A 19 323

0013437

Es wird jeweils eine Gruppe von Segmenten gleichzeitig bewegt, in einen vorzugsweisen Bereich 3 bis 6 mal je etwa 2 bis 6 Stück. Es wird dadurch die Zykluszeit beträchtlich verkürzt.

Die Erfindung ist beispielhaft in der Zeichnung dargestellt und im folgenden weiter beschrieben. Es zeigen:

Figur 1  schematische Zerlegung eines Kerns in 4 mal 4 Gruppen;

Figur 2  Schnitt durch eine Vorrichtung;

Figur 3  Schnitt (E-F nach Figur 2) durch eine Vorrichtung ohne Reifenform- und Pressenoberteil;

Figur 4  Schnitt (G-H nach Figur 2) durch dieselbe Vorrichtung;

Figur 5  Reifenwerkzeug (Ausschnitt aus Figur 2);

Figur 6  Kernentformelement (Blick in Richtung Schnitt G-H nach Figur 2 auf die Segmente) ohne Presse und Formwerkzeug;

Figur 7  Kernsegment (Schnitt C-D in Figur 8);

Figur 8  Kernsegment (Blick in Richtung A nach Figur 6);

Figur 9  Reifenwerkzeug in geschlossenem Zustand;

Figur 10  Reifenwerkzeug bei dem eine Kernsegmentgruppe zur Reifenmitte verfahren ist;

Le A 19 321

0013437

Figur 11  Reifenwerkzeug, bei dem eine weitere Kernsegmentgruppe entfernt ist;

Figur 12  Reifenwerkzeug,bei dem die dritte Kernsegmentgruppe entfernt ist;

Figur 13  ganz zerlegtes Reifenwerkzeug.

Der Kern 1 ist in diesen Beispielen in 16 Segmente zerteilt,  die hier in 4 Gruppen zusammengefaßt sind; die
Zugehörigkeit zu einer Gruppe ist durch Zufügung der
Buchstaben a, b, c, d verdeutlicht. Im Teilbild a) ist
die erste Kernsegmentgruppe 1a zur Reifenmitte verfahren. Die Kernsegmente 1a werden danach senkrecht zur Reifenebene
verfahren. Im Teilbild b) ist ein Zustand dargestellt,
wo bereits die zweite Kernsegmentgruppe 1 b vom expandierten
Zustand in die Reifenmitte gezogen worden ist. Die Kernsegmente 1a und 1b sind näherungsweise scheibenförmig;
bevorzugt sind sie leicht keilförmig nach außen verjüngt.

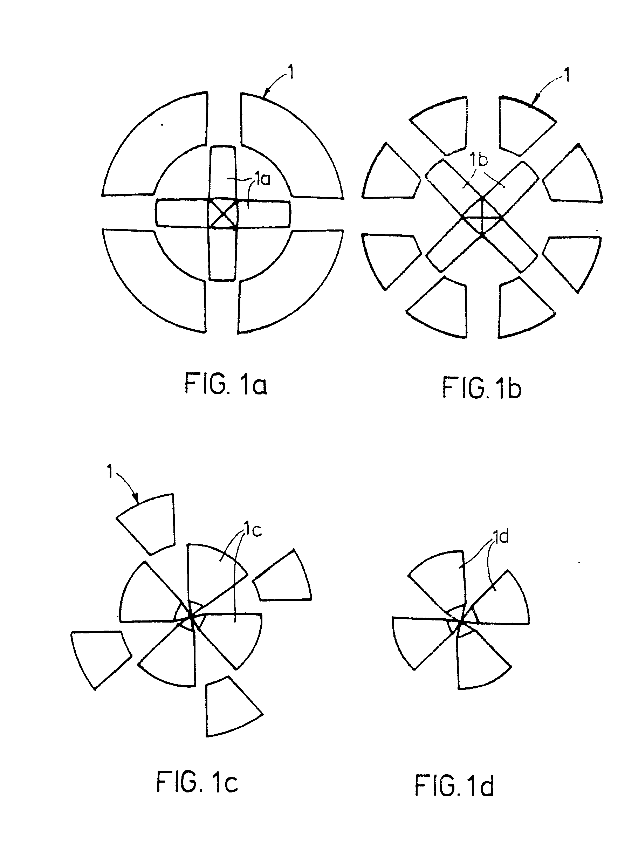

In Figur 1c ist nur noch die letzte Kernsegmentgruppe 1d
im expandierten Zustand, während die Gruppe 1c zur Mitte
hin verfahren ist. Die letzte Kernsegmentgruppe 1d im
Teilbild 1d) muß nicht mehr aus der Reifenebene herausgefahren werden.

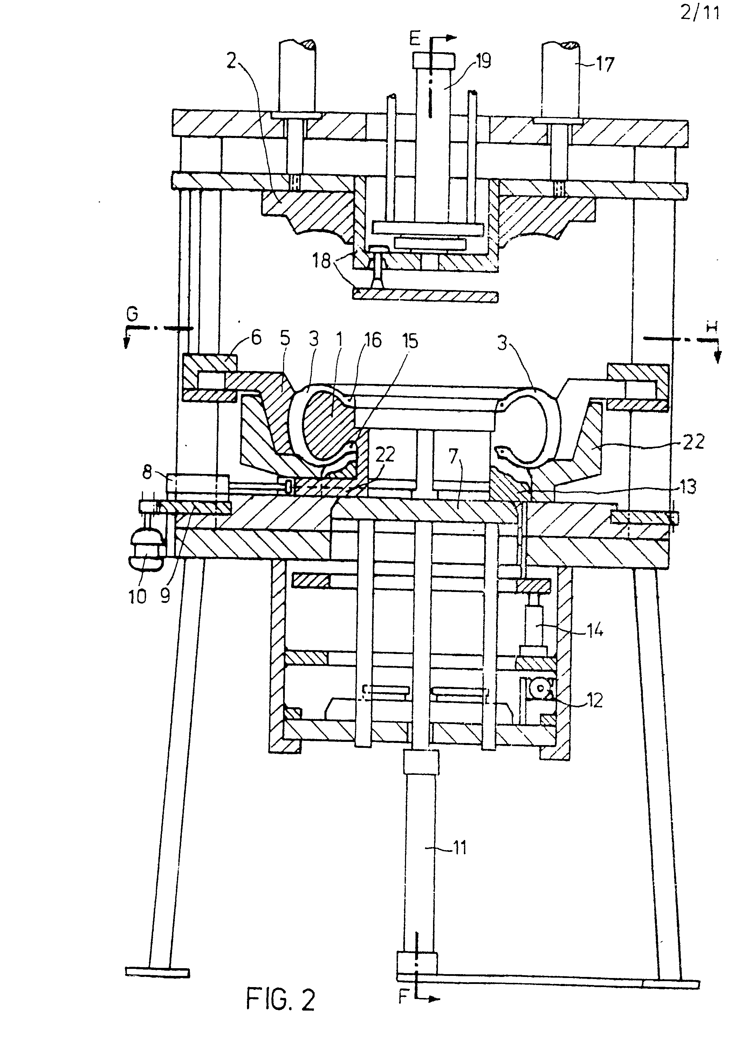

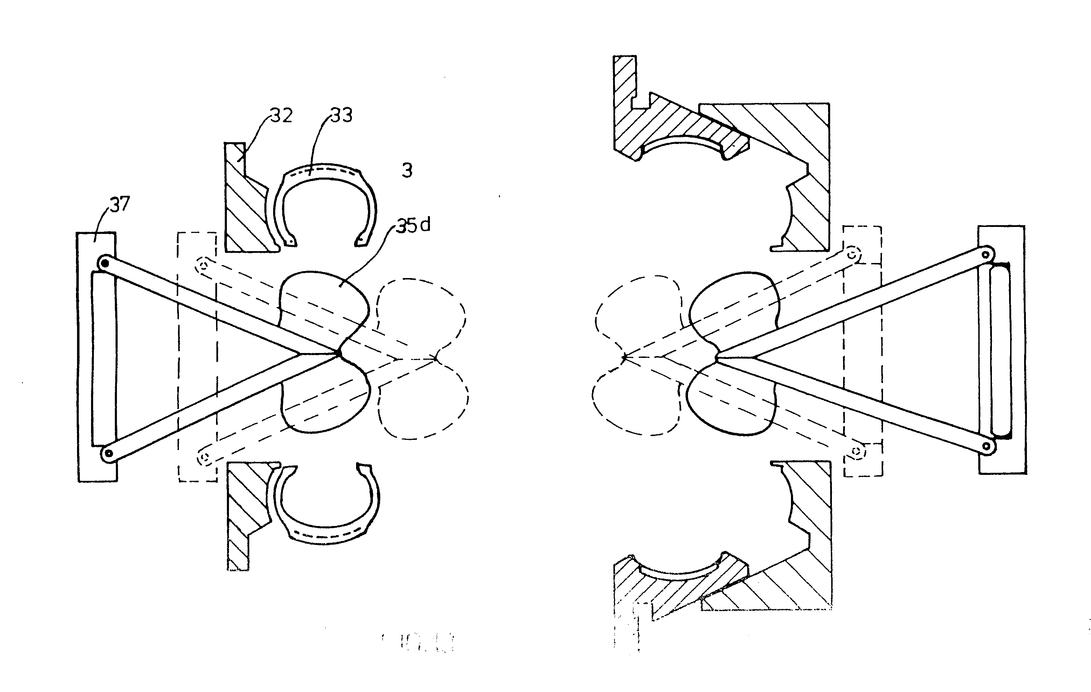

Die Figuren 2 bis 8 und 9 bis 13 zeigen zwei verschiedene
Ausführungsformen der erfindungsgemäßen Vorrichtung. Die
Figur 2 zeigt einen Schnitt durch eine Vorrichtung von
der Seite mit Presse, Werkzeug und Kernentformeinheit.
Das Formoberteil 2 ist hochgefahren. Der Reifen 3 kann
in dieser Stellung noch nicht entnommen werden. Wie man

Le A 19 323

im linken Bereich erkennen kann, ist auch mindestens eine Kernsegmentgruppe 1 im Reifen 3 vorhanden. Außerdem sind die Außenformsegmente 5 noch im Eingriff. Erst wenn das Formoberteil noch weiter angehoben wird, werden die Außenformsegmente 5 mittels der Klauen 6 nach außen gezogen und der Reifen 3 wird frei.

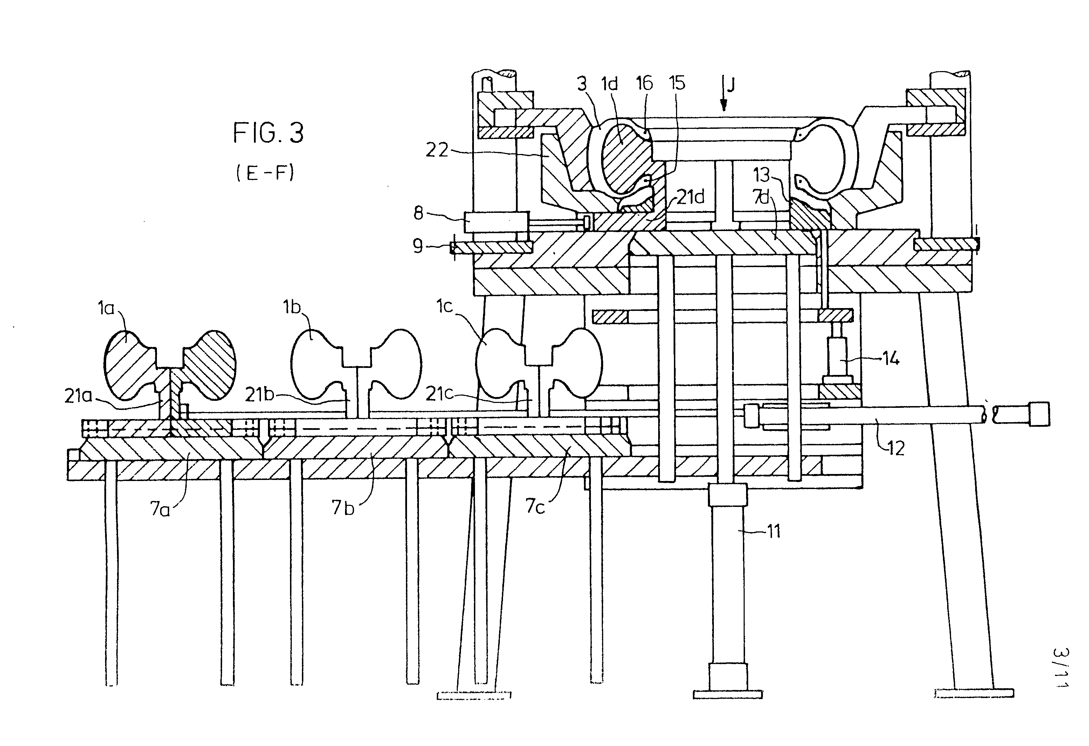

In Figur 3 ist der Auf- und Abbau des segmentierten Reifenkernes 1 besser erkennbar. Die Kernsegmentgruppen 1a, 1b, 1c, 1d werden jeweils auf einem eigenen Hubtisch 7 abgelegt. Zur Kennzeichnung, welche Segmentgruppe zu welchem Hubtisch gehört, sind diese mit 7a, 7b, 7c, 7d bezeichnet. In Figur 3 sind bereits 3 Kernsegmentgruppen entnommen. Der Hubtisch 7d ist hochgefahren; mittels der Hubelemente 8 können die Kernsegmente 1d, die sich noch im Reifen 3 befinden, zur Reifenmitte hin verfahren werden. Die Hubelemente 8 transportierten natürlich auch in gleicher Weise die Kernsegmente von der Mitte des Hubtisches in die Kernposition. Damit die 4 Hubelemente 8 alle Segmentgruppen 1 bewegen können, befinden sie sich auf einem Drehtisch 9, der durch einen Getriebemotor 10 (Fig. 2) verstellt wird.

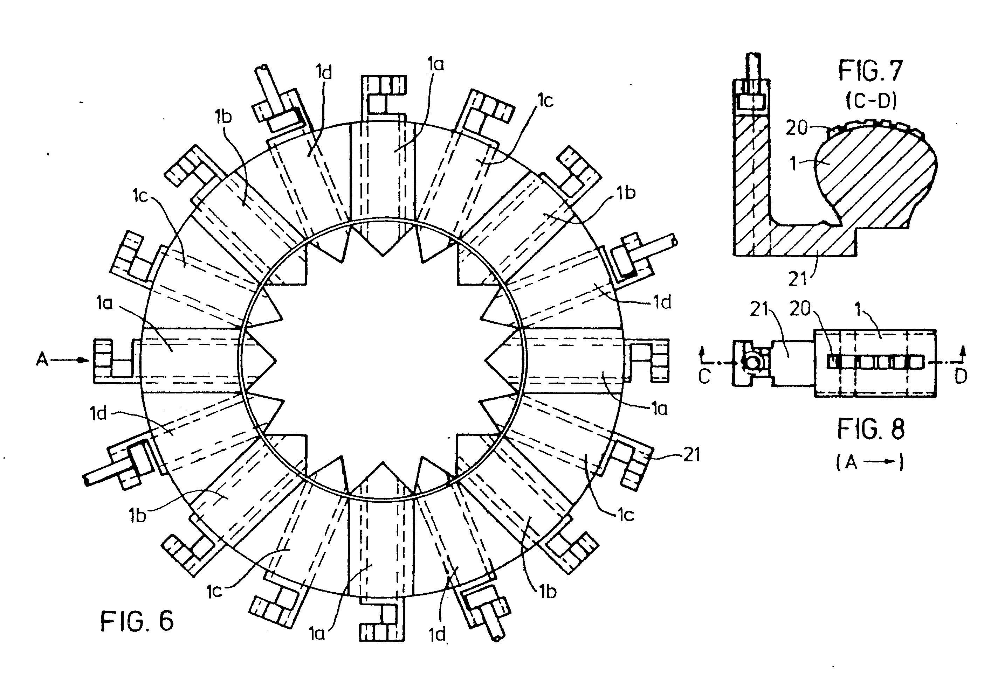

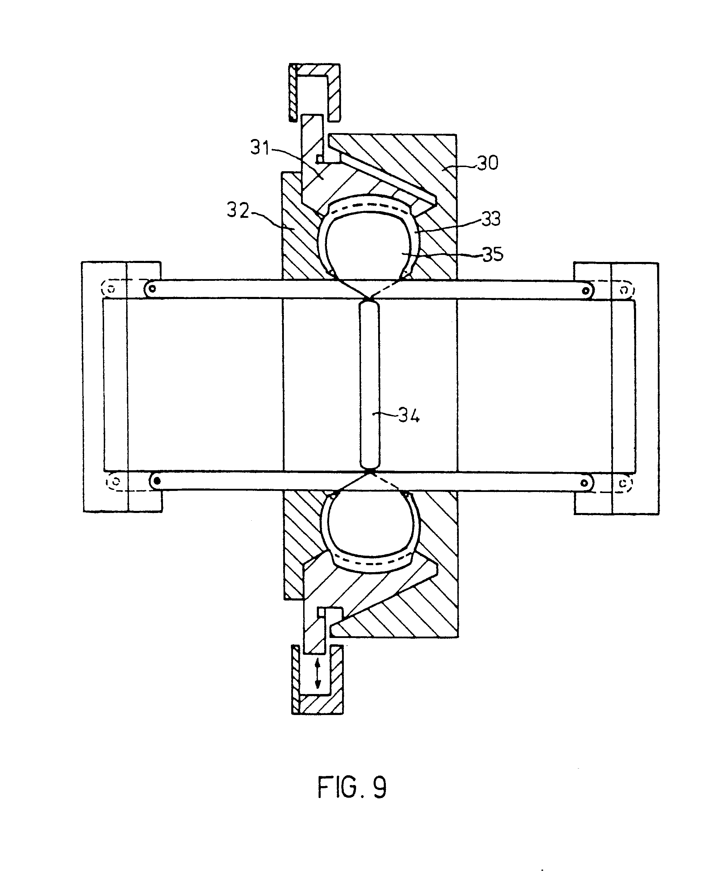

Das Expandieren der Kernsegmente verläuft in umgekehrter Reihenfolge je nach Zerlegen des Kerns. Der Hubtisch 7d mit den Kernsegmenten 1d muß natürlich nicht mittels der Hubvorrichtung 11 abgesenkt werden, wenn der Reifen entnommen wird. Beim Kernaufbau werden sie als erste Gruppe wieder in die Kernposition, so wie in Figur 2 und 3 gezeigt, verfahren. Der leere Hubtisch 7d

0013437

wird abgesenkt. Dann wird durch die Vorschubbewegung des Hubzylinders 12 die Kernsegmentgruppe 1c auf dem Hubtisch 7c unter das Reifenwerkzeug verfahren. In der Zwischenzeit werden·auch die Hubelemente 8 auf dem Drehtisch 9 in die für die Kernsegmente 1c erforderliche Ankuppelstellung verfahren. Die Kupplungen an den Kernsegmenten 1 sind in den Figuren 7 und 8 besser zu erkennen. Die Hubelemente 8 verfahren die Kernsegmente 1c, wenn sie auf dem Hubtisch 7c in die Reifenebene angehoben worden sind, in ihre expandierte Stellung. In gleicher Weise werden auch die restlichen Kernsegmente 1b und 1a eingebaut. Der Formring 13 wird mittels des Hubelementes 14 angehoben. Bei den allermeisten Reifen sind Fußringe erforderlich. Bei dem erfindungsgemäßen Verfahren wird der untere Fußring 15 eingelegt, wenn alle Kernsegmente 1 zum Reifenmittelpunkt gefahren sind. Der obere Fußring 16 wird bei expandiertem Kern 1 eingelegt ehe die Form durch die Presse 17 geschlossen wird. Beim Verschließen des Formwerkzeugs werden die Formaußensegmente 5, das Formoberteil 2 mit dem Angußplattensystem 18 in die Fertigungsstellung gefahren. Das Angußplattensystem 18 übernimmt dabei die Verriegelung der Kernsegmente 1 und verschließt die Form im Zentrum. Der verbleibende Hohlraum wird über das Endaggregat 19 der Dosiereinrichtung (gewöhnlich ein Mischkopf) befüllt. Es bildet sich dann ein Reifen, der durch die Kontur des Werkzeugs (2,5,13) und der Innensegmente 1 bereits die endgültige Form erhält.

Nach Ausreaktion oder Ausvulkanisation wird der Kern in umgekehrter Reihenfolge wie eben beschrieben zerlegt, d.h. die zuletzt montierte Kernsegmentgruppe 1a

Le A 19 323

wird zuerst auf den Hubtisch 7a gezogen. Vor der Kerndemontage muß der Formring 13 abgesenkt werden.

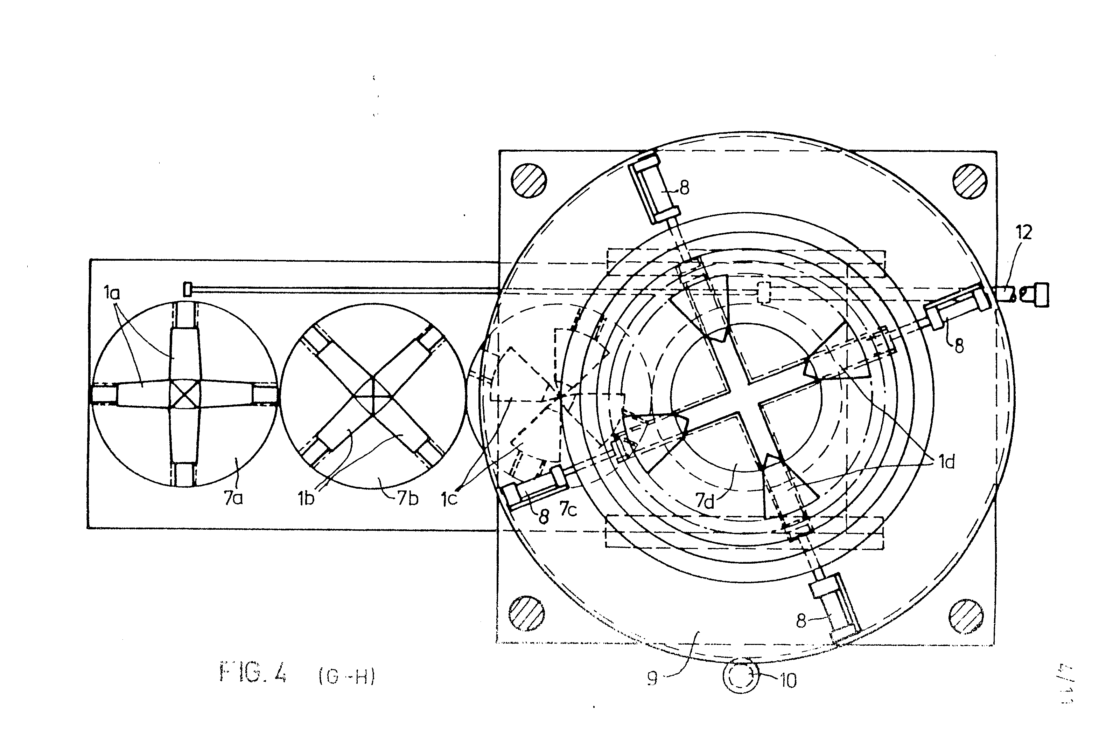

In Figur 4 befinden sich Kernsegmentgruppen 1a, 1b, 1c auf den Hubtellern 7a, 7b, 7c in abgesenkter Position seitlich vom Reifenwerkzeug. Die Kernsegmente 1d sind in expandierter Position verfahren.

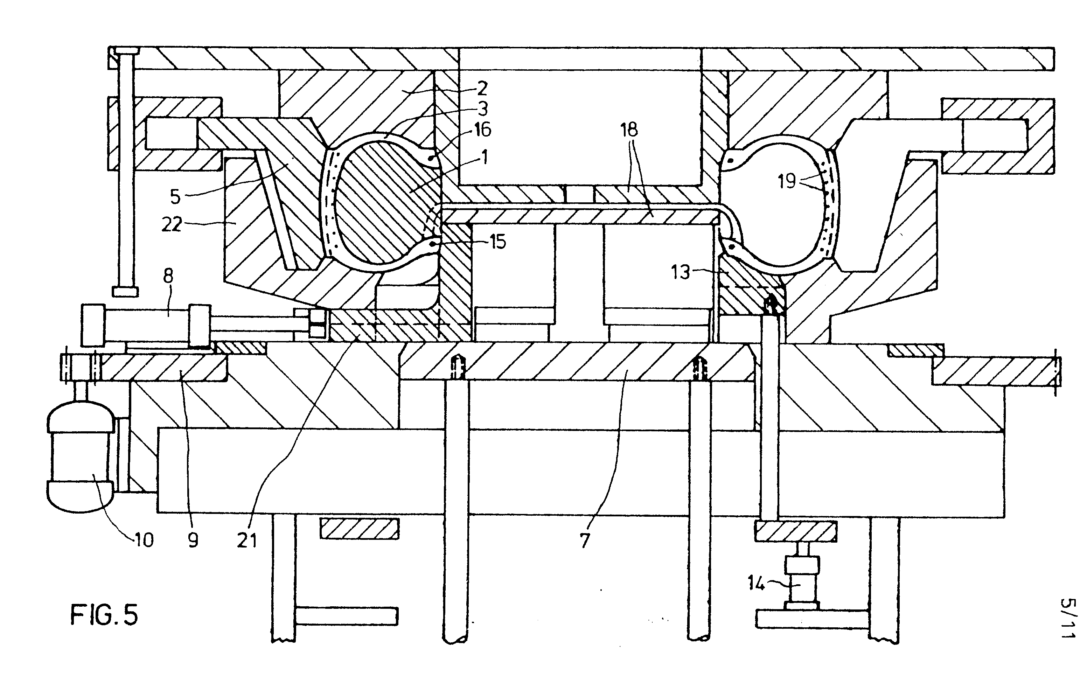

In Figur 5 ist die Reifenform ganz zusammengepreßt. Es ist erkennbar, daß zusätzlich zu den Fußringen 15,16 noch eine Verstärkung 19 in der Lauffläche des Reifens vorhanden ist. Solche Verstärkungseinlagen werden im zerlegten Zustand des Kerns, dann wenn auch der untere Fußring 15 eingelegt wird, in die Form gebracht. An den Segmenten sind üblicherweise Haltekämme 20, wie in Figur 7 und 8 zu sehen ist.

Figur 6 zeigt die Segmente im Fertigungszustand ohne Presse und ohne Formwerkzeug.

In den Figuren 7 und 8 ist ein Einzelsegment der Gruppe 1a oder 1b mit Kämmen 20 dargestellt.

Ein weiteres Beispiel für die erfindungsgemäße Vorrichtung ist in Figuren 9 bis 13 dargestellt. Die Reifenachse läuft in diesem Beispiel im Gegensatz zur vorherigen Vorrichtung horizontal. Bevorzugt wird diese Vorrichtung zum Konfektionieren und Verpressen von Elastomeren verwendet. Besonders geeignet ist sie auch zum Vulkanisieren von vorkonfektionierten Kautschukreifen. Der Kern ist sehr gut zugänglich. Aufgrund seiner geringen Anzahl

Le A 19 323

von Bauteilen ist er einfach und schnell montiert. Diese Kernentformeinheit ist gut geeignet bei Rotationsguß. Ohne Außenform (30,31,32) ist die Kerneinheit zur Reifenkonfektionierung geeignet.

Während sich im ersten Schritt der Kernzerlegung im Beispiel 1 die Kernsegmente in der bzw. parallel zur Reifenebene bewegen, ist hier die Bahn kreisförmig. Da aber die Radien im Vergleich zum Weg relativ groß sind, verbleiben die Kernsegmente näherungsweise in der Reifenebene.

Dem Werkzeug, das die Außenkontur des Reifens festlegt (in den Figuren 9 bis 13 die Bauteile 30,31,32) entsprechen in den Figuren 2 bis 5 die Werkzeugteile 22,13,5,2. In Figur 9 ist das Werkzeug in Fertigungsstellung gezeigt. Wenn das Reifenmaterial ausreagiert ist, wird die zentrale Verriegelungsplatte 34 nach rechts verfahren.

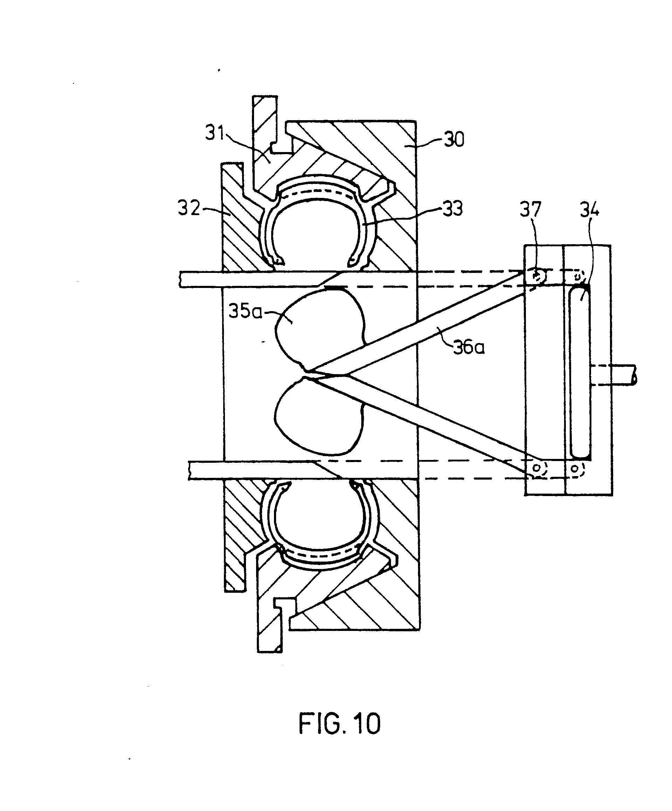

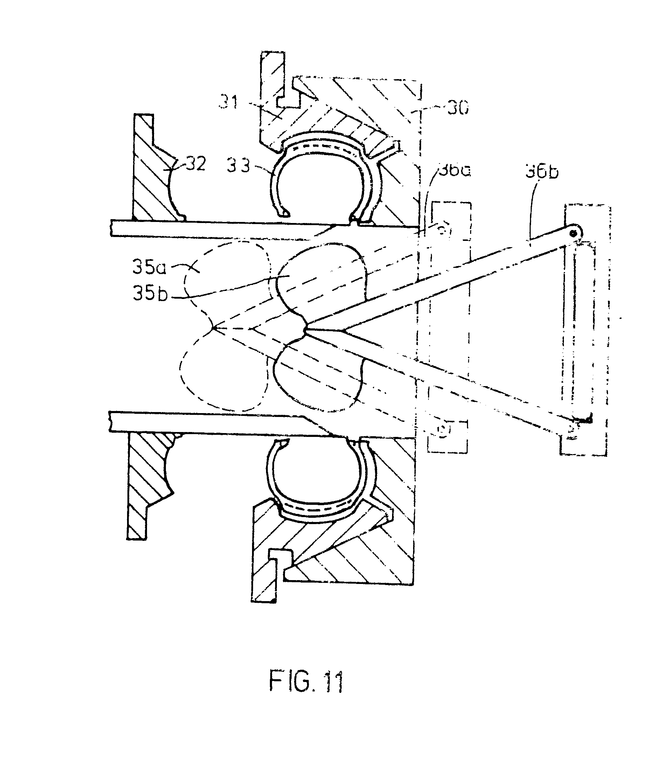

In Figur 10 ist die erste Kernsegmentgruppe 35a gezogen; die Seitenschalen 30,32 sind geöffnet und die Formteile 31 in radialer Richtung aufgefahren. Die Kernsegmente 35 sind mit Gelenkarmen 36 verbunden; sie sind zur Mitte hin auf einer Kreisbahn um die Gelenkachsen 37 verschwenkbar. In Figur 11 werden das Werkzeug mit den Außenformteilen 30,31, einschließlich der noch nicht eingefahrenen Kernsegmentgruppen 35b, 35c, 35d um ca. eine Reifenbreite nach rechts verfahren. Die bereits gezogene Kernsegmentgruppe 35a verbleibt an ihrem Platz und ist strichliert gezeichnet. In dieser Stellung wird die Kernsegmentgruppe 35b durch Hubelemente demontiert; sie finden zwischen den Gelenkarmen 36a der bereits entformten Kernsegmente 35a Platz.

Le A 19 323

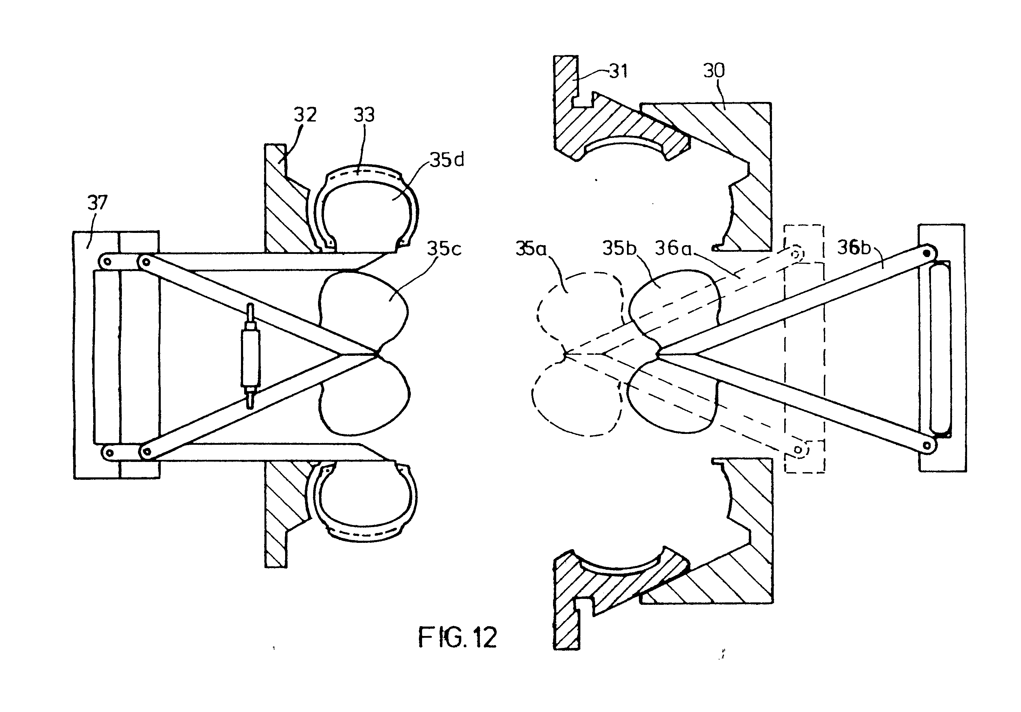

Figur 12 zeigt den nächsten Entformungsschritt. Die abgeschwenkten Kernsegmentgruppen 35a und 35b mit ihren Schwenk- und Führungslagerungen und die geöffnete segmentierte Außenform 31, 30 verbleiben am Ort, während die andere Außenformschale 32 mit dem Reifen 33 und dem verbleibenden Kernsegment 35c und 35d um ca. 2 Reifenbreiten aus ihrer Stellung nach Figur 11 nach links fahren. Dort wird die Kernsegmentgruppe 35 c entfernt.

Als letzter Schritt wird der Formaußenring 32 mit der Kernsegmentgruppe 35d samt Lagerung 37 noch einmal um ca. eine Reifenbreite nach links verfahren und die letzten Kernsegmente 35d zum Reifenmittelpunkt geschwenkt. Der Reifen 33 kann durch die Öffnung zwischen den nach rechts und links verfahrenen Außenformteilen und Kernsegmentgruppen entnommen werden. Der Kernaufbau erfolgt in umgekehrter Reihenfolge.

Wenn Reifen gesondert konfektioniert werden sollen, wird die Außenform 30,31,32 durch Zentrierringe ersetzt, die in Verbindung mit der Verriegelungsplatte 34 die Zentrierung der Kernsegmente 35 gewährleistet.

0013437

Patentansprüche

1) Verfahren zum Zerlegen eines segmentierten Reifenkerns innerhalb einer Reifenform, dadurch gekennzeichnet, daß Kernsegmente gruppenweise zur Reifenmitte hin bewegt und von dort aus diese Kernsegmentgruppe in eine Ebene außerhalb der Reifenebene gebracht werden.

2) Verfahren zum Zusammenbau eines Reifenkernes aus Kernsegmenten innerhalb einer Reifenform, dadurch gekennzeichnet, daß Kernsegmente gruppenweise in die Reifenmitte, näherungsweise in die Reifenebene, gebracht werden, durch eine radiale Bewegung gruppenweise in ihre Position als Formkern gefahren und in ihrer Endposition arretiert werden.

3) Vorrichtung zur Durchführung des Verfahrens nach Ansprüchen 1 und 2, bestehend aus einem Werkzeug, durch das die Außenkontur des Reifens festgelegt wird und einem Reifenkern, durch den die Innenkontur des Reifens festgelegt wird, sowie den dazugehörigen Beschickungs-, Transport- und Steuereinrichtungen, dadurch gekennzeichnet, daß der Kern (1,35) aus Segmenten besteht, die Segmente (1,35) zur Reifenmitte hin mit einem Führungs- und Adapterteil (21,36) verbunden sind, die Segmente (1,35) gruppenweise näherungsweise in der Reifenebene radial bewegbar und bei einer Lage in Reifenmitte auch näherungsweise senkrecht zur Reifenebene bewegbar sind.

Le A 19 323

FIG. 1a

FIG.1b

FIG. 1c

FIG.1d

FIG. 2

FIG. 3

(E-F)

FIG. 4 (G-H)

FIG.5

FIG. 6

FIG. 7
(C-D)

FIG. 8
(A →)

FIG. 9

FIG. 10

FIG. 11

FIG.12

0013437

32    33

3

37    35d

**Europäisches Patentamt**

## EUROPÄISCHER RECHERCHENBERICHT

| EINSCHLÄGIGE DOKUMENTE | | | KLASSIFIKATION DER ANMELDUNG (Int Cl.) |
|---|---|---|---|
| Kategorie | Kennzeichnung des Dokuments mit Angabe, soweit erforderlich, der maßgeblichen Teile | Betrifft Anspruch | B 29 H 17/00 |
| X | FR - A - 2 314 050 (PIRELLI) | 1-3 | 17/06 |
| X | DE - A - 2 517 595 (BRIDGESTONE) | 1-3 | 5/08 |
| | US - A - 3 922 123 (FIRESTONE) | 1-3 | |
| | US - A - 3 358 330 (PIRELLI) | 1-3 | |
| A | US - A - 3 459 849 (VREDESTEIN) | | |
| A | US - A - 1 467 142 (H. DENMIRE) | | |
| A | DE - C - 352 089 (H. DENMIRE) | | |
| A | US - A - 1 358 941 (H. DENMIRE) | | RECHERCHIERTE SACHGEBIETE (Int Cl.) |
| A | FR - A - 559 453 (P. MATTIA) | | B 29 H |

----

KATEGORIE DER GENANNTEN DOKUMENTE

X von besonderer Bedeutung
A technologischer Hintergrund
O nichtschriftliche Offenbarung
P Zwischenliteratur
T der Erfindung zugrunde liegende Theorien oder Grundsätze
E kollidierende Anmeldung
D in der Anmeldung angeführtes Dokument
L aus andern Gründen angeführtes Dokument
& Mitglied der gleichen Patent- familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 15-04-1980 | DECLERCK |

EPA form 1503.1   06.78